# EUROPEAN PATENT SPECIFICATION

(11) **EP 4 551 862 B1**
(45) Date of publication and mention of the grant of the patent: **29.04.2026**
(21) Application number: 23736398.1
(22) Date of filing: 06.07.2023
(51) Int. Cl.: F17C 13/02

(54) **PRESSURE REGULATOR FOR GAS CYLINDER WITH A LOW-PRESSURE SENSOR AND RESTRICTION FOR DETERMINING A GAS FLOW AND REMAINING USAGE TIME**
DRUCKREGLER FÜR GASZYLINDER MIT EINEM NIEDERDRUCKSENSOR UND EINER DROSSEL ZUR BESTIMMUNG EINES GASSTROMES UND DER VERBLEIBENDEN NUTZUNGSZEIT
RÉGULATEUR DE PRESSION POUR BOUTEILLE DE GAZ MUNI D'UN CAPTEUR BASSE PRESSION ET D'UNE RESTRICTION POUR DÉTERMINER UN ÉCOULEMENT DE GAZ ET LE TEMPS D'UTILISATION RESTANT

(30) Priority: 06.07.2022 LU 502467
(43) Date of publication of application: 14.05.2025
(73) Proprietor: ROTAREX S.A., 7759 Roost (Bissen) (LU)
(72) Inventor: FOGEN, René, 4780 Sankt Vith (BE); SCHMITZ, Philippe, 7303 Steinsel (LU); SELLEN, Stephan, 66693 Wehingen (DE)
(74) Representative: Ipsilon Luxembourg
(86) International application number: PCT/EP2023/068725
(87) International publication number: WO 2024/008872

(56) References cited:
- WO-A1-2015/132285
- WO-A1-2020/074325
- US-A1- 2005 076 956
- US-B1- 7 089 956

## Description

### Technical field

The invention is directed to the field of pressure regulators for gas cylinder, e.g. containing gas, like oxygen, at high pressure of at least 100 bar.

### Background art

Prior art patent document published WO 01/69340 A1 discloses a monitoring system for a gas cylinder, comprising essentially a pressure sensor provided between a shut-off valve of the gas cylinder and a pressure reducer downstream of said shut-off valve, a temperature sensor of the gas in the cylinder and a control unit connected to the sensors. The control unit is designed for providing different indications relating the system, including the level of gas in the cylinder.

Prior art patent document published FR 2 868 160 A1 discloses also a monitoring system for a gas cylinder, comprising essentially a pressure sensor for the gas in the cylinder and a control unit connected to the sensor and configured for displaying a remaining usage time of the gas cylinder, based on a variation of the gas pressure in the cylinder while gas is outputted. Gas needs however to be outputted during a long time before causing a detectable and interpretable pressure variation in the gas cylinder, meaning that the reactivity of such a monitoring system is low.

Prior art patent document published WO 2012/164240 A1 discloses a pressure regulator for gas cylinder, comprising a flow selector and sensors detecting discrete positions of the flow selector for determining the gas flow, a sensor of the gas pressure in the cylinder, so as to determine the remaining usage time of the gas cylinder. The detection of the position of the flow selector alleviates the deficiency of the preceding reference, i.e. a low reactivity. However, it renders the pressure regulator sophisticated and thereby expensive and subject to failures.

Prior art patent document published EP 3 756 715 A1 discloses also a monitoring system for a gas cylinder equipped with a pressure reducer and a flow selector, comprising a sensor of the position of the flow selector and a sensor of the gas pressure in the cylinder, so as to determine a remaining usage time of the gas cylinder. The monitoring system further comprises a pressure sensor in a derivation conduit fluidly connected between the flow selector and an outlet, so as to detect a disconnection or an obstruction of a gas consumer device. Similarly to the above reference, this monitoring system renders the pressure regulator sophisticated and thereby expensive and subject to failures.

Prior art patent document published US 7,089,956 B1 discloses a pressure regulator for a gas cylinder, comprising a gas inlet, a gas outlet and a gas passage fluidly connecting the gas inlet with the gas outlet; a pressure reducer located in the gas passage, downstream of the gas inlet; and a pressure sensor located in the gas passage upstream of the pressure reducer.

### Summary of invention

### Technical Problem

The invention has for technical problem to overcome at least one of the drawbacks of the above cited prior art. More specifically, the invention has for technical problem to provide a pressure regulator for a gas cylinder that determines in a reliable and reactive manner the remaining usage time of the gas cylinder while being of simple construction.

### Technical solution

The invention is directed to a pressure regulator for a gas cylinder, comprising: a gas inlet, a gas outlet and a gas passage fluidly connecting the gas inlet with the gas outlet; a pressure reducer located in the gas passage, downstream of the gas inlet; a flow selector located in the gas passage, downstream of the pressure reducer; a pressure sensor located in the gas passage between the flow selector and the outlet; characterized in that the pressure regulator further comprises: a flow restriction located in the gas passage and downstream of the pressure sensor.

The flow restriction is inside the pressure regulator, upstream of the gas outlet.

According to a preferred embodiment, the flow selector comprises a cross-section that is selectable between a minimum cross-section and a maximum cross-section, the flow restriction having a cross-section comprised between the minimum cross-section and the maximum cross-section, preferably between the minimum cross-section and 90% of the maximum cross-section, more preferably between 60% and 90% of the maximum cross-section, even more preferably between 70% and 90% of the maximum cross-section . Advantageously, the maximum cross-section is dimensioned such as to, when selected to be flown by the gas flow, generate a pressure directly downstream of said maximum cross-section that is comprised between 50% and 95%, preferably between 70% and 90%, of the dynamic nominal pressure of the pressure regulator. Advantageously, the minimum cross-section is dimensioned such as to, when selected to be flown by the gas flow, generate a pressure directly downstream of said minimum cross-section that is comprised between 5% and 50%, preferably between 5% and 30%, of the dynamic pressure of the pressure regulator. The dynamic pressure of the pressure regulator is the regulated pressure directly at the outlet of the pressure regulator when being flown by a flow of gas.

According to a preferred embodiment, the flow restriction comprises a calibrated hole mounted upstream of the outlet.

According to a preferred embodiment, the gas passage between the flow selector and the flow restriction forms a volume of at least 1mm³.

According to a preferred embodiment, the flow selector is configured to provide a selectable flow comprised between 0.1 and 25 litres/min.

According to a preferred embodiment, the flow selector provides a selectable flow in a step-wise manner only.

According to a preferred embodiment, the pressure regulator further comprises a control unit to which the pressure sensor is connected and configured to determine a gas flow rate from a signal of the pressure sensor.

According to a preferred embodiment, the control unit is configured to determine the gas flow rate from the signal of the pressure sensor in the absence of a signal of detection of a position of the flow regulator.

According to a preferred embodiment, the control unit is configured to determine the gas flow rate from the signal of the pressure sensor in the absence of a signal of measurement of the gas flow.

According to a preferred embodiment, the pressure regulator further comprises a pressure switch located in the flow passage between the pressure reducer and the flow selector, and electrically connected to the control unit, said control unit being configured to switch from a sleep-mode to a wake-up mode when the gas in contact with the pressure switch reaches a threshold pressure preferably comprised between 0.5 and 5 bar, more preferably comprised between 0.5 and 3 bar. **The** threshold pressure can be comprised between 0.5bar and 80% of the dynamic pressure of the pressure regulator.

Advantageously, the pressure switch comprises a plunger movable mounted on a body of the pressure regulator and urged in a first position by a spring and movable to a second position when the gas in contact with the plunger reaches the threshold pressure, and a switch or sensor outside of the body and configured to cooperate with the plunger so as to detect when said plunger is in the second position. Advantageously, the first position is a retracted position and the second position is an extended position. Advantageously, the switch or sensor magnetically cooperates with a distal end of the plunger. Advantageously, the switch or sensor is mounted on a printed circuit board attached to the body.

According to a preferred embodiment, the pressure regulator further comprises a high-pressure sensor located in the gas passage upstream of the pressure reducer, and electrically connected to the control unit.

According to a preferred embodiment, the control unit is configured to determine a remaining usage time of the gas cylinder based on the determined gas flow and a signal of the high-pressure sensor.

According to a preferred embodiment, the pressure regulator further comprises a branch of the gas passage directly connecting between the pressure reducer and the flow selector and connecting to an auxiliary connector.

According to a preferred embodiment, the auxiliary connector comprises a shutter that is normally closed by a spring and the pressure regulator further comprises a position sensor of said shutter.

According to a preferred embodiment, the auxiliary connector further comprises a position pin with that is attached to the shutter and extends away from said shutter to the position sensor for interacting with said position sensor.

According to a preferred embodiment, the pressure switch is located in the branch of the gas passage.

According to a preferred embodiment, the pressure sensor is configured to measure pressures ranging from 0 to 10 bar.

According to a preferred embodiment, the pressure regulator is void of a detector of a position of the flow regulator and void of a gas flow sensor.

The invention is also directed to a method of determining a gas flow rate at a gas outlet of a pressure regulator on a gas cylinder, wherein the pressure regulator comprises a pressure reducer and a flow selector downstream of the pressure reducer, the method comprises: measuring a gas pressure in the gas flow downstream of the flow selector and upstream of a flow restriction; and determining the gas flow rate based on the measured gas pressure in the gas flow downstream of the flow selector and upstream of a flow restriction.

Advantageously, the flow restriction is inside the pressure regulator, upstream of a gas outlet of said pressure regulator.

The measured gas pressure in the gas flow downstream of the flow selector and upstream of a flow restriction corresponds to an electric signal representative of said gas pressure.

Advantageously, the above determination of the gas flow rate is without detecting a position of the flow selector.

According to a preferred embodiment, the method further comprises: measuring a pressure of the gas in the gas cylinder; and determining a remaining usage time based on the measured pressure of the gas in the gas cylinder and the determined gas flow rate.

According to a preferred embodiment, the method further comprises: determining that the gas outlet is obstructed when the measured gas pressure in the gas flow downstream of the flow selector and upstream of a flow restriction reaches or exceeds a predetermined level. The predetermined level is advantageously greater than a maximum gas pressure in the gas flow downstream of the flow selector and upstream of a flow restriction, when the flow selector is set at a maximum cross-section without any obstructions in normal use, and equal to or less than a nominal outlet pressure of the pressure reducer. The maximum cross-section of the flow selector is selected so that the maximum gas pressure in the gas flow downstream of the flow selector and upstream of a flow restriction, when the flow selector is set at a maximum cross-section, and in the absence of obstruction, is less than the nominal dynamic outlet pressure of the pressure reducer, preferably comprised between 70% and 90% of the nominal dynamic outlet pressure of the pressure reducer.

Advantageously, the pressure regulator of the method is according to the invention.

### Advantages of the invention

The invention is particularly interesting in that it provides an efficient and reliable solution means for determining a gas flow rate in that it does not require the use of a flow rate sensor and a detection of the position of the flow selector, both of which being potentially sophisticated, expensive and/or subject to failure.

Existing flow detection technologies based on the measurement of the position of the flow selector axis or handwheel are not able to detect if there is really a flow respectively a change in the flow value as they only measure a position. In the worst case, the pressure regulator does not work or might be obstructed meaning the patient does not receive oxygen, but the position sensor indirectly detects a theoretical flow value. The invention is particularly interesting in that it only provides a flow value if there really is a flow supplying the patient with oxygen,

Gas flowmeters can be based on an accurate measure of a pressure difference which very often does not sustain an outlet pressure of a few bars that can occur when the gas outlet is obstructed. They can also be based on thermal transfer, like using a hot wire, thereby consuming a higher amount of electrical power and increased inertia for the detection of flow changes.

### Brief description of the drawings

Figure 1 comprises a longitudinal sectional view of a pressure regulator for a gas cylinder, according to the invention, and a layout of the architecture of the pressure regulator.
Figure 2 is a section view of a portion of the pressure regulator of figure 1, showing the gas passage to a medical port.
Figure 3 is a schematic illustration of the upper part of the pressure regulator of figure 1, illustrating the functioning principle of the pressure measurement for determining the gas flow position and the gas flow.
Figure 4 is a graphic illustration of the signal of the pressure sensor at a low and a high pressure in the gas cylinder, for each position of the flow selector, thereby illustrating the correlation between the signal of the pressure sensor and the gas flow.
Figure 5 is an embodiment of the pressure switch schematically represented in figure 1.

### Description of an embodiment

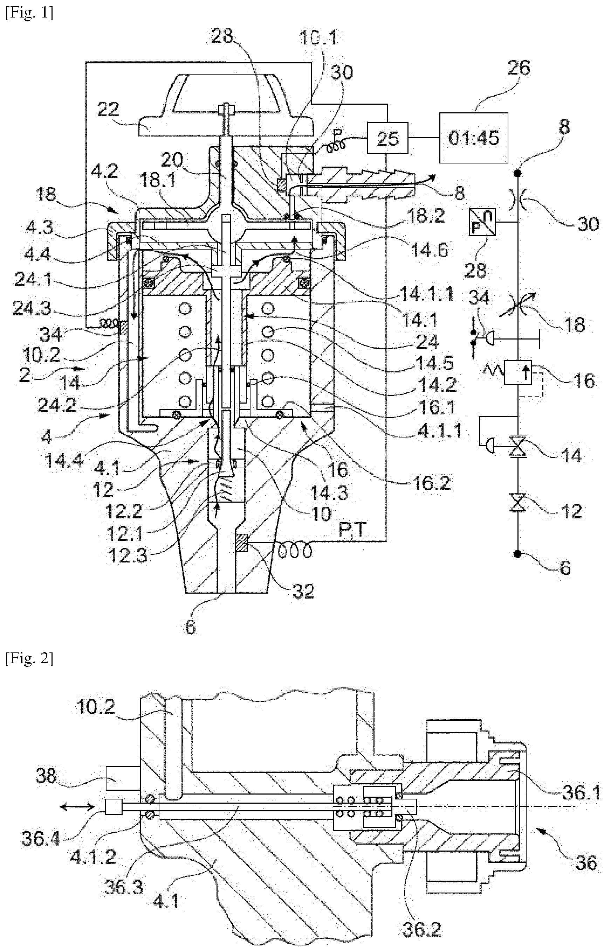

Figure 1 comprises a longitudinal sectional view of a pressure regulator for a gas cylinder, according to the invention, and a layout of the architecture of the pressure regulator.

The pressure regulator 2 comprises a body 4 with a gas inlet 6, a gas outlet 8 and a gas passage fluidly interconnecting the gas inlet and gas outlet. The gas inlet 6, the gas outlet 8 and the gas passage are formed the body 4. The body 4 comprises for instance a main part 4.1, a top part 4.2 and a ring nut 4.3 securing the top part 4.2 on the main part 4.1. The gas inlet 6 is formed on a lower end of the main part 4.1 of the body 4 that forms a male thread designed for engaging with a female thread on a neck of a gas cylinder, as this is customary. The outlet 8 is on the top part 4.2 of the body 4, for instance formed by a fitting with hose barb, being however understood that other fittings can be considered.

The pressure regulator 2 comprises a shut-off valve 12 located in the gas passage 10, downstream of the gas inlet 6. The shut-off valve 12 comprises essentially a shutter 12.1, a seat 12.2 and a spring 12.3 urging the shutter 12.1 against the seat 12.2 so as to normally close the gas passage 10. The shutter 12.1 comprises a poppet located on an upstream side of the seat 12.2 and a stem rigid with the poppet and extending from said poppet through the seat 12.2. The seat 12.2 is fixed with the body 4.

The pressure regulator 2 further comprises a pressure reducer 14, also located in the gas passage 10, downstream of the shut-off valve 12. The pressure reducer comprises a movable element 14.1, being for instance shaped as a piston, in a cavity, for instance a bore, formed in the gas passage 10 in the body 4, for instance in the main part 4.1 of the body 4. The movable element comprises a shaft 14.2 extending from the movable element 14.1 and provided at its distal end with a shutter 14.3 that cooperates with a seat 14.4. A spring 14.5 urges the movable element 14.1 and incidentally the shutter 14.3 away from the seat 14.4 so as to open the gas passage between said shutter 14.3 and said seat 14.4. The distal end of the shaft 14.2 is received in a sliding and gas-tight fashion in a bushing 16.1 of a pressure relief element 16. The latter comprises an annular plate 16.2 resting on a bottom of the cavity housing the pressure reducer 14 and urged on said bottom by the spring 14.5 of the pressure reducer 14. Sealing means are provided in the contact between the bottom of the cavity and the annular plate 16.2 of the pressure relief element 16. When the gas undergoing a pressure reduction by flowing between the shutter 14.3 and seat 14.4 of the pressure reducer 14 reaches a pressure exceeding a predetermined threshold, the resulting force on the pressure relief element 16, for instance on the portion of the annular plate 16.2 delimited by the sealing means, will move said pressure relief element 16 slightly away from the bottom of the cavity against the force of the spring 14.5 and will flow to the ambient through the leak passage 4.1.1 in the body 4, for instance the main part 14.1 thereof.

The distal end of the shaft 14.2 of the pressure reducer 14 is provided with longitudinal passages allowing the gas to flow longitudinally towards an upper face of the movable element 14.1 in a regulating chamber 14.6 delimited by said movable element 14.1, the cavity and an intermediate plate 4.4 of the body 4. The pressure of gas in the regulating chamber 14.6 exerts on the movable element 14.1 a force that is opposed to the resilient force of the spring 14.5 and progressively moves said movable element 14.1, acting as a pressure sensing element, towards the seat 14.4 resulting in a progressive closing of the gas passage and thereby a pressure reduction and regulation of said pressure reduction. The above functioning principle is a such well known from the skilled person.

The upper face of the movable element 14.1 is configured to contact in a gas-tight fashion, by virtue of sealing means 14.1.1, the opposite face of the intermediate plate 4.4 of the body 4, so as to close the gas passage when the pressure at the gas inlet 6 reaches a lower limit, e.g. a few bar, i.e. when the gas cylinder is becoming empty, thereby forming a residual pressure device. The sealing means 14.1.1 are for instance an annular gasket housed in a cavity formed on the upper face of the movable element 14.1, being however understood that it could be constructed differently, e.g. provided on the opposite face of the intermediate plate 4.4 of the body 4.

The pressure regulator 2 further comprises a flow selector 18, also located in the gas passage 10, downstream of the pressure reducer 14. The flow selector 18 comprises essentially a disk 18.1 provided with calibrated holes, and a fixed passage 18.2 provided with sealing means against which the disk 18.1 can rotate so as to selectively position one of its calibrated holes in front of said fixed passage 18.2 so as to allow the gas at the reduced pressure to flow through a calibrated cross-section in the gas passage. The fixed passage 18.2 is formed on the body 4, for instance on the top part 14.2 thereof. The disk 18.1 is rigidly fixed with a spindle 20 supported by the top part 4.2 of the body and to which a hand-wheel 22 is fastened for rotational operation thereof.

The pressure regulator 2 further comprises an actuating pin 24 for actuating the shut-off valve 12. The actuating pin comprises an upper portion 24.1 rotatably engaging with the spindle 20, a lower portion 24.2 extending through the shaft 14.2 of the pressure reducer 14 until a distal end of the stem of the shutter 12.1 of the shut-off valve 12, and an intermediate portion 24.3 with a cam surface cooperating with a corresponding surface on the intermediate plate 4.4 of the body 4.

Operation of the pressure regulator 2 is the following. Rotation of the hand-wheel 22 causes rotation of the actuating pin 24 causing, by virtue of the cam surface 24.3, a translational downward movement of said actuating pin 24 and thereby opening of the shut-off valve 12. The gas flows through the pressure reducer 14 and the flow selector 18 to the gas outlet 8. Further rotation of the hand-wheel causes a further rotation of the disk 18.1 that allows selection of a flow rate by positioning one of the several calibrated holes in front of the fixed passage 18.2. The cam surface 24.3 of the actuating pin 24 is configured to generate the translational movement that over a fraction of a complete turn of the spindle and hand-wheel, e.g. not more than 50°, so as to leave the remainder of the complete turn for selecting the flow rate.

The above construction of the pressure regulator 2 is further detailed in the application WO 2020/074325 A1 and the corresponding patent application published US 2021382506 A1.

As this is visible in figure 1, the pressure regulator 2 comprises a control unit 25 that is connected to a display 26 for indicating among others a remaining usage time of the gas cylinder onto which the pressure regulator 2 is mounted and based on the gas flow that is selected on the pressure regulator 2. To that end, the pressure regulator 2 further comprises a pressure sensor 28 located in the gas passage between the flow selector 18 and the outlet 8, as well as a flow restriction 30 provided also in the gas passage between the pressure sensor 28 and the outlet 8. The pressure sensor 28 is electrically connected to the control unit 25 so as to provide a signal representative of the gas pressure, the control unit being configured for determining the gas flow rate based on that signal and for determining a remining usage time of the gas cylinder. To that end, the pressure regulator 2 further comprises a high-pressure sensor 32 that is located in the gas passage 10 at the gas inlet 6, for sensing the pressure of the gas in the gas cylinder. The high-pressure sensor 32 is also electrically connected to the control unit 25. It can comprise or be associated with a temperature sensor.

The presence of the flow restriction 30 causes, in the presence of a gas flow, an increase of the pressure upstream thereof, i.e. in the section of the gas passage where the pressure sensor 28 is located, which is representative of the gas flow rate. The cross-section S of the gas passage of the flow restriction 30 can dependent on several parameters, predominantly on the flow rate. For a flow selector with a cross-section of the flow passage ranging from a minimal value x mm² to a maximal value y mm², the cross-section of the gas passage of the flow restriction 30 is advantageously comprised between the minimum cross-section and the maximum cross-section, i.e. x≤S≤y, preferably, x<S<0.9·y.

The outlet pressure of the pressure reducer 14 can be comprised between 3.5 and 10 bar, so that the pressure sensor 28 is advantageously configured for measuring pressures comprised between 0 and 10bar. The pressure sensor 28 can have a working pressure ranging from 0 to 5 bar, preferably from 0 to 4 bar, while showing an overpressure (where the sensor still outputs a signal representative, but less accurate, of the effective pressure) of at least 16bar and/or of not more than 20bar, and/or a burst pressure of at least 25bar.

The maximum cross-section of the flow selector can be dimensioned such as to, when selected to be flown by the gas flow, generate a limited pressure loss resulting in a pressure directly downstream of said maximum cross-section that is comprised between 50% and 95%, preferably between 70% and 90%, of the dynamic pressure of the pressure reducer 14. Also, the minimum cross-section of the flow selector can be dimensioned such as to, when selected to be flown by the gas flow, generate a substantial pressure loss, resulting in pressure directly downstream of said minimum cross-section that is comprised between 5% and 50%, preferably between 5% and 30%, of the dynamic pressure of the pressure regulator 14. The dynamic pressure of the pressure regulator 14 is the regulated pressure directly at the outlet of the pressure regulator when being flown by a flow of gas.

The pressure sensor 28 is preferably positioned at some distance of the flow restriction 30 in order to sense exclusively the total pressure, i.e. to avoid sensing a pressure where the gas is in movement to such an extent that its static pressure is reduced compared with its total pressure. That distance can be of at least a few millimetres. The pressure sensor 28 is for instance located in a cavity 10.2 of the gas passage 10, where said cavity shows a volume of at least 1mm³, preferably at least 20mm³, more preferably at least 50mm³. Such a cavity is useful for stabilizing the gas pressure while the gas is flow through said cavity towards the flow restriction 30 and gas outlet 8.

The measure of the gas pressure in the gas cylinder, by means of the high-pressure sensor 32, optionally provided or associated with a temperature sensor, allows to determine the quantify, for instance the mass, of gas contained gas cylinder. As gas is drawn from the gas cylinder, the gas pressure in the gas cylinder progressively diminishes. Also, the effect of the temperature on the pressure of a given mass of gas can be taken into account by the measure of temperature, by application of the perfect gas law and different real gas models of equation of state, like the Van der Waals equation.

The above determination of the gas flow based on the pressure measures upstream of the flow restriction 30 allows to determine, knowing the mass of gas contained in the gas cylinder, the remaining usage time. This determination is achieved without requiring a physical detection of the position of the flow selector, as in the prior art, and also without requiring the use of a flowmeter or flow sensor, usually based on an accurate measure of a differential pressure between a flow restriction, where such sensors are usually not compatible with pressures of up to 8-10 bar occurring when the gas outlet or the device connected thereto is closed.

The above-described determination of the gas flow based on the pressure measure upstream of the flow restriction 30 is rendered possible because the devices or appliances connected to the gas outlet 8 offer a limited flow resistance. Also, an appropriate selection of the cross-section S of the gas passage of the flow restriction 30, in relation the output normal pressure of the pressure reducer 14 and the range of gas flow of the flow selector, allows the optimize the sensibility of the pressure sensor 28 and thereby reduce its requirements and costs.

Still with reference to figure 1 we can observe that the gas passage 10 comprises a branch 10.2 directly connected to the regulating chamber 14.6 and extending along a side wall of the cavity housing the pressure reducer 14. A pressure switch 34 is located in operative connection with that branch 10.2 of the gas passage 10, and is electrically connected to the control unit 25. The latter is configured to swich from a sleep-mode to a wake-up or operative mode when the pressure switch is in the presence of a rising gas pressure reaching a predetermined threshold, which can be comprised between 0.5 and 5 bar, more preferably between 0.5 and 3 bar. The threshold pressure can be comprised between 0.5bar and 80% of the dynamic pressure of the pressure regulator. This arrangement is advantageous in that it allows to automatically bring the control unit in operative mode upon rotation of the hand-wheel that opens the shut-off valve 12. The reverse can also apply, i.e. the control unit 25 can be configured to switch from an active or operative mode to a sleep-mode once the switch pressure is subjected to a gas pressure that falls below the above predetermined threshold, i.e. when the hand-wheel is rotated backward so as to close the shut-off valve 12. For this situation to occur in a reliable manner, it is advantageous that the flow selector is configured to provide a gas passage in the position of the hand-wheel and relative spindle that closes the shut-off valve 12, so that any residual pressure in the regulating chamber 14.6 can be vented to the gas outlet 8 and allow the gas pressure in contact with the pressure switch 34 to reach of fall below the above predetermined threshold.

The above functionally of the pressure switch is particularly advantageous for preserving the battery life of the control unit, in particular considering that a minimum operational life of 5 years without battery replacement is usually required in the field of gas regulators.

Figure 2 is sectional view of a portion of the gas regulator 2 of figure 1, the section plane however not passing by the longitudinal axis and being inclined relative to the section plane of the section view of figure 1.

The branch 10.2 of the gas passage 10 fluidly connecting to the regulating chamber 14.6 (figure 1) is visible. It extends longitudinally along the side wall of the cavity housing the pressure reducer (not represented in figure 2) and also transversally below said cavity until the auxiliary connector 36 being for instance a medical connector. The latter is as such known and commonly used in hospitals and medical houses for connecting an active device using oxygen. For such active devices, the selector of flow as provided by the flow selector 18 is not necessary and even more not desired, so that the branch 10.2 of the gas passage fluidly connects directly upstream of the flow selector 18 and downstream of the pressure reducer.

As this is apparent, the auxiliary connector 36 comprises a body 36.1 and a shutter 36.2 urged by a spring on an upstream side of a seat formed in the body 36.1, so that the auxiliary connector 36 is normally closed and requires the corresponding connector of the device to comprise a pin forcing the shutter 36.2 to an open position. For properly detecting connection of a device to the auxiliary connector, a position sensor 38 configured for detecting a position of the shutter 36.2 is provided. In the present example, the position sensor 38 is located outside of the gas and of the body and a detector pin 36.3 is attached to the shutter 36.2 and extends out of the branch 1.2 of the gas passage, with a distal end 36.4 outside of the body and in the vicinity of the position sensor 38. The detector pin 36.3 extends through a passage 4.1.2 with sealing means of the body 4, for instance of the main part 4.1 thereof. The position sensor 38 can be of the inductive Hall-effect type, being however understood that other types and other configurations can be considered. As a matter of example, the position sensor 38 can be integrated in the auxiliary connector 36, depending on the materials used for the body 36.1 and the shutter 36.2 of the auxiliary connector 36, and possibly also of the material of the main part 4.1 of the body of the gas regulator, at least if the sensor is of the inductive type. The sensor could be a contact sensor in which case the materials involved are not or at least less relevant.

The position sensor 38 is advantageously electrically connected to the control unit 25 of the gas regulator 2 (figure 1), so that the control unit receives the information that a connector is engaged with the auxiliary connector.

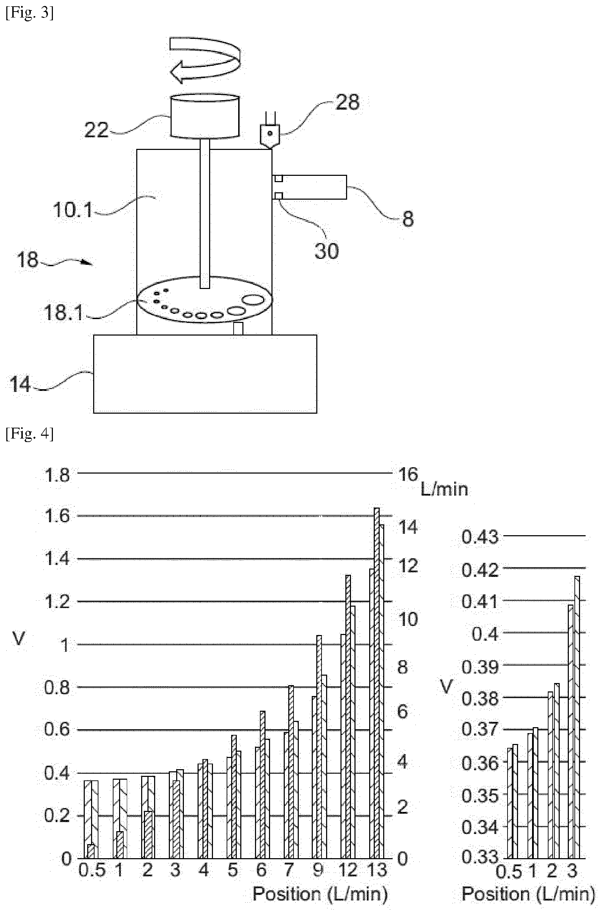

Figure 3 is a schematic illustration of the upper part of the pressure regulator of figure 1, illustrating the functioning principle of the pressure measurement for determining the gas flow position and the gas flow.

The cavity 10.1 formed by the gas passage between the flow selector 18 and the flow restriction 30 is well visible and somehow enlarged for the sake of the clarity. The calibrated holes on the disk 18.1 of the flow selector are well visible. The flow of gas, once it has passed the selected calibrated hole of the flow selector can decelerate and stabilize in the cavity 10.1 before passing through the flow restriction 30 towards the outlet 8.

Figure 4 is a graphic illustration of the signal of the pressure sensor at a low and a high pressure in the gas cylinder, for each position of the flow selector, thereby illustrating the correlation between the signal of the pressure sensor and the gas flow.

A pressure regulator according the architecture schematically illustrated in figure 3 has been tested by outputting gas at the different positions of the flow selector and for different pressures inside the gas cylinder, while the output signal of the pressure sensor has been observed and the effective flow rate at the output of the pressure regulator has been measured.

In the left graphic, the horizontal axis corresponds to the 11 positions of the flow selector, named by their nominal flow rate, i.e. 0.5, 1, 2, 3, 4, 5, 6, 7, 9, 11 and 15 litres per minutes (l/min); the left vertical axis corresponds to an output signal of the pressure sensor 28 (figures 1 and 3), expressed for instance in volts (V) and the right vertical axis corresponds to the measured flow rate expressed in litres per minutes (l/min). Each histogram bar, i.e. each per one of the eleven positions of the flow selector, comprises a three bars, a central one (densely dashed or dark) being the measures flow rate, a left one (dashed) being the measured output signal of the pressure sensor when the pressure in the gas cylinder is 20bar, and a right one (dashed) being the measured output signal of the pressure sensor when the pressure in the gas cylinder is 200bar.

The right graphic is a magnification of the left portion of the left graphic, showing the first four positions of the flow selector, i.e. 0.5, 1, 2 and 3.

We can observe that the output signals of the pressure sensor, both at 20bar and 200bar in the gas cylinder, are very well correlated with the nominal and effective flow rates. In particular for at least the 8 first positions of the flow selector, i.e. 0.5, 1, 2, 3, 4, 5 and 6 l/min, the output signals at 20bar and 200bar in the gas cylinder are very close and sufficiently distinct from each other for allowing discrimination. For the further positions of the flow selector, i.e. 7, 9, 12 and 15 l/min, the output values at 20bar and 200bar in the gas cylinder show a larger difference, however the maximum value, for instance at 200bar in the gas cylinder, of each of these positions is substantially lower the lower value, for instance at 20bar in the gas cylinder, of the next position, so that these output values still allow a proper discrimination.

**It** is to be noted that in case the deviation in the output signal of the pressure sensor due to variations of the pressure in the gas cylinder would hinder a proper discrimination between the positions of the flow selector, the pressure in the gas cylinder as measured by the high-pressure sensor 32 (figure 1) can be taken into account for a better and accurate determination of the selected flow rate.

It is to be noted that the flow selector does not need to show fixed positions, i.e. can be of the continuous type like a needle flow valve whose actuator or needle comprises an infinity of possible angular positions, thereby providing a continuous flow selection. With reference to the above detailed figure 4, it is indeed possible to correlate a curve corresponding to the effective flow rate with a curve corresponding to mean values of the output signals for each position.

Also, when the signal received by the pressure sensor exceeds a predetermined threshold, i.e. higher than the maximum value for the greatest selectable flow, for instance 15 l/min, it can be concluded that the gas outlet is obstructed, in particular that the device or appliance connected thereto is not operative. In medical applications, such device or appliance can be a respiratory mask equipped with a hose. The above pressure sensor signal reaching or exceeding the predetermined threshold can concluded to an obstruction of the mask, very likely due to the hose being kinked, as this can often occur. The control unit can output a corresponding alarm.

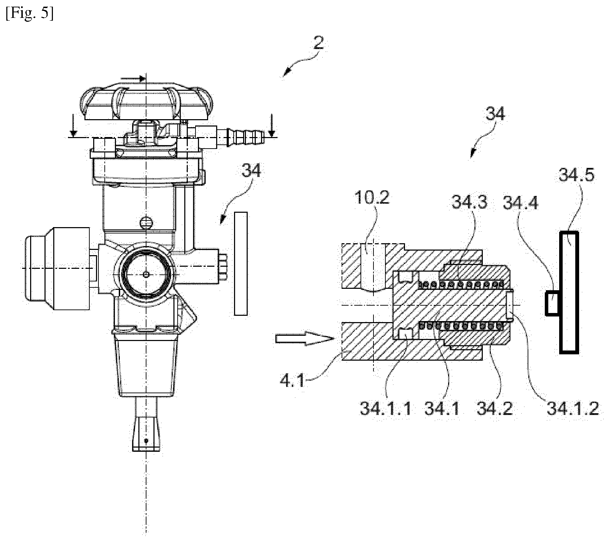

Figure 5 is a representation of a pressure regulator 2 for a gas cylinder, similar to the one in figure 1, and a detailed representation of an embodiment of the pressure switch 34 schematically represented in figure 1 and discussed in a functional manner in connection with that figure.

According to an embodiment of the invention, the pressure switch 34 comprises a plunger 34.1 that is slidably received in a cavity which is instance formed directly in the body 4, i.e. the main part 4.1 thereof. The plunger 34.1 comprises a gasket 34.1.1 that forms a gas-tight barrier with the branch 10.2 of the gas passage fluidly connecting directly upstream of the flow selector and downstream of the pressure reducer. The plunger is retained, in a movable fashion, on the main part 4.1 of the body by means of a retainer 34.2 fastened to said main part 4.1 of the body. A spring 34.3 is operatively placed between the plunger 34.1 and the retainer 34.2 so as to urger said plunger 34.1 is a retracted position relative to the main part 4.1 of the body and the retainer 34.2. The plunger 34.1 comprises a distal free end carrying a magnet or metallic part 34.1.2 that is configured to cooperate with a switch or sensor 34.4, e.g. of the reed type, optical type, or hall-effect type, respectively. The switch or sensor 34.4 can be carrier by a printed circuit board onto which other electronic components can be provided.

As this is apparent, in the absence of pressure above a threshold that can be comprised between 0.5 and 5 bar, the spring 34.3 maintains the plunger 34.1 in a retracted position where the distal end thereof remains distant from the switch or sensor 34.4. Once the shut-off valve is opened, the gas flow through the pressure reducer to a nominal pressure of at least 3.5 bar, thereby moving the plunger 34.1 to an extended position where the distal end magnetically cooperates with the switch or sensor 34.4 for detecting that the pressure regulator 2 is opened.

## Claims

1. A pressure regulator (2) for a gas cylinder, comprising:
- a gas inlet (6), a gas outlet (8) and a gas passage (10) fluidly connecting the gas inlet (6) with the gas outlet (8);
- a pressure reducer (14) located in the gas passage (10), downstream of the gas inlet (6);
- a flow selector (18) located in the gas passage (10), downstream of the pressure reducer (14); **characterized by**
- a pressure sensor (28) located in the gas passage (10) between the flow selector (18) and the gas outlet (8);
wherein the pressure regulator (2) further comprises:
- a flow restriction (30) located in the gas passage (10) and downstream of the pressure sensor (28).

2. The pressure regulator (2) according to claim 1, wherein the flow selector (18) comprises a cross-section that is selectable between a minimum cross-section and a maximum cross-section, the flow restriction (30) having a cross-section smaller than the maximum cross-section.

3. The pressure regulator (2) according to one of claims 1 and 2, wherein the flow restriction (30) comprises a calibrated hole mounted upstream of the gas outlet (8).

4. The pressure regulator (2) according to any one of claims 1 to 3, wherein the gas passage (10.2) between the flow selector (18) and the flow restriction (30) forms a volume of at least 1mm³.

5. The pressure regulator (2) according to any one of claims 1 to 4, wherein the flow selector (18) is configured to provide a selectable flow comprised between 0.1 and 25 litres/min.

6. The pressure regulator (2) according to any one of claims 1 to 5, wherein the flow selector (18) provides a selectable flow in a step-wise manner only.

7. The pressure regulator (2) according to any one of claims 1 to 6, further comprising a control unit (25) to which the pressure sensor (28) is connected and configured to determine a gas flow rate from a signal of the pressure sensor (28), preferably wherein the control unit (25) is configured to determine the gas flow rate from the signal of the pressure sensor (28) in the absence of a signal of detection of a position of the flow regulator (18), further preferably wherein the control unit (25) is configured to determine the gas flow rate from the signal of the pressure sensor (28) in the absence of a signal of a direct measurement of the gas flow rate.

8. The pressure regulator (2) according to claim 7, further comprising a pressure switch (34) located in the gas passage (10) between the pressure reducer (14) and the flow selector (18), and electrically connected to the control unit (25), said control unit (25) being configured to switch from a sleep-mode to a wake-up mode when the gas in contact with the pressure switch (34) reaches a pressure of at least 0.5 bar.

9. The pressure regulator (2) according to any one of claims 7 to 8, further comprising a high-pressure sensor (32) located in the gas passage (10) upstream of the pressure reducer (14), and electrically connected to the control unit (25), preferably wherein the control unit (25) is configured to determine a remaining usage time of the gas cylinder based on the determined gas flow and a signal of the high-pressure sensor (32).

10. The pressure regulator (2) according to any one of claims 1 to 9, further comprising a branch (10.2) of the gas passage (10) directly connecting between the pressure reducer (14) and the flow selector (18) and connecting to an auxiliary connector (36), preferably wherein the auxiliary connector (36) comprises a shutter (36.2) that is normally closed by a spring and the pressure regulator (2) further comprises a position sensor (38) of said shutter (36.2), further preferably wherein the auxiliary connector (36) further comprises a position pin (36.3) with that is attached to the shutter (36.2) and extends away from said shutter (36.2) to the position sensor (38) for interacting with said position sensor (38).

11. The pressure regulator (2) according to claim 8 and according to claim 10, wherein the pressure switch (34) is located in the branch (10.2) of the gas passage (10).

12. The pressure regulator (2) according to any one of claims 1 to 11, wherein the pressure regulator (2) is void of a detector of a position of the flow selector (18) and void of a gas flow sensor.

13. A method of determining a gas flow rate at a gas outlet of a pressure regulator on a gas cylinder, wherein the pressure regulator comprises a pressure reducer and a flow selector downstream of the pressure reducer, **characterized in that** the method comprises:
- measuring a gas pressure in the gas flow downstream of the flow selector and upstream of a flow restriction; and
- determining the gas flow rate based on the measured gas pressure in the gas flow downstream of the flow selector and upstream of a flow restriction.

14. The method according to claim 13, further comprising:
- measuring a pressure of the gas in the gas cylinder; and
- determining a remaining usage time based on the measured pressure of the gas in the gas cylinder and the determined gas flow rate.

15. The method according to one of claims 13 and 14, further comprising:
- determining that the gas outlet is obstructed when the measured gas pressure in the gas flow downstream of the flow selector and upstream of a flow restriction reaches or exceeds a predetermined level, preferably wherein the predetermined level is higher than a gas pressure in the gas flow downstream of the flow selector and upstream of a flow restriction when the flow selector is set at a maximum cross-section and in the absence of obstruction, and equal to or less than a nominal outlet pressure of the pressure reducer.

## Patentansprüche

1. Ein Druckregler (2) für eine Gasflasche, umfassend:
- einen Gaseinlass (6), einen Gasauslass (8) und einen Gasdurchgang (10), der den Gaseinlass (6) fluidisch mit dem Gasauslass (8) verbindet;
- einen Druckminderer (14), der im Gasdurchgang (10) stromabwärts vom Gaseinlass (6) angeordnet ist;
- einen Durchflusswähler (18), der im Gasdurchgang (10) stromabwärts vom Druckminderer (14) angeordnet ist; **gekennzeichnet durch**
- einen Drucksensor (28), der im Gasdurchgang (10) zwischen dem Durchflusswähler (18) und dem Gasauslass (8) angeordnet ist;
wobei der Druckregler (2) ferner umfasst:
- eine Durchflusseinschränkung (30), die im Gasdurchgang (10) und stromabwärts vom Drucksensor (28) angeordnet ist.

2. Der Druckregler (2) gemäß Anspruch 1, wobei der Durchflusswähler (18) einen Querschnitt umfasst, der zwischen einem minimalen Querschnitt und einem maximalen Querschnitt wählbar ist, wobei die Durchflusseinschränkung (30) einen Querschnitt hat, der kleiner ist als der maximale Querschnitt.

3. Der Druckregler (2) gemäß einem der Ansprüche 1 oder 2, wobei die Durchflusseinschränkung (30) ein kalibriertes Loch umfasst, das stromaufwärts vom Gasauslass (8) montiert ist.

4. Der Druckregler (2) gemäß einem der Ansprüche 1 bis 3, wobei der Gasdurchgang (10.2) zwischen dem Durchflusswähler (18) und der Durchflusseinschränkung (30) ein Volumen von mindestens 1mm³ bildet.

5. Der Druckregler (2) gemäß einem der Ansprüche 1 bis 4, wobei der Durchflusswähler (18) konfiguriert ist, einen wählbaren Durchfluss zwischen 0,1 und 25 Litern/Minute bereitzustellen.

6. Der Druckregler (2) gemäß einem der Ansprüche 1 bis 5, wobei der Durchflusswähler (18) einen wählbaren Durchfluss nur stufenweise bereitstellt.

7. Der Druckregler (2) gemäß einem der Ansprüche 1 bis 6, ferner umfassend eine Steuereinheit (25), mit der der Drucksensor (28) verbunden ist und welcher konfiguriert ist, eine Gasdurchflussrate aus einem Signal des Drucksensors (28) zu bestimmen, vorzugsweise worin die Steuereinheit (25) dazu konfiguriert ist, die Gasdurchflussrate aus dem Signal des Drucksensors (28) in Abwesenheit eines Signals zur Erkennung der Position des Durchflussreglers (18) zu bestimmen, weiter vorzugsweise worin die Steuereinheit (25) dazu konfiguriert ist, die Gasdurchflussrate aus dem Signal des Drucksensors (28) in Abwesenheit eines direkten Messsignals der Gasdurchflussrate zu bestimmen.

8. Der Druckregler (2) gemäß Anspruch 7, ferner umfassend einen Druckschalter (34), der im Gasdurchgang (10) zwischen dem Druckminderer (14) und dem Durchflusswähler (18) angeordnet ist und elektrisch mit der Steuereinheit (25) verbunden ist, wobei die Steuereinheit (25) dazu konfiguriert ist, von einem Schlafmodus in einen Aufwachmodus zu wechseln, wenn das Gas, das mit dem Druckschalter (34) in Kontakt steht, einen Druck von mindestens 0,5 bar erreicht.

9. Der Druckregler (2) gemäß einem der Ansprüche 7 bis 8, ferner umfassend einen Hochdrucksensor (32), der im Gasdurchgang (10) stromaufwärts vom Druckminderer (14) angeordnet ist und elektrisch mit der Steuereinheit (25) verbunden ist, vorzugsweise wobei die Steuereinheit (25) dazu konfiguriert ist, eine verbleibende Nutzungszeit der Gasflasche basierend auf dem ermittelten Gasfluss und einem Signal des Hochdrucksensors (32) zu bestimmen.

10. Der Druckregler (2) gemäß einem der Ansprüche 1 bis 9, ferner umfassend einen Abzweig (10.2) des Gasdurchgangs (10), der sich direkt zwischen dem Druckminderer (14) und dem Durchflusswähler (18) anschlieest und mit einem Hilfsanschluss (36) verbunden ist, vorzugsweise wobei der Hilfsanschluss (36) einen Verschluss (36.2) umfasst, der normalerweise durch eine Feder geschlossen wird, und der Druckregler (2) ferner einen Positionssensor (38) des genannten Verschlusses (36.2) umfasst, weiter vorzugsweise wobei der Hilfsanschluss (36) ferner einen Positionstift (36.3) umfasst, der an den Verschluss (36.2) angebracht ist und sich von dem genannten Verschluss (36.2) zu dem Positionssensor (38) erstreckt, um mit dem genannten Positionssensor (38) zu interagieren.

11. Der Druckregler (2) gemäß Anspruch 8 und gemäß Anspruch 10, wobei der Druckschalter (34) im Abzweig (10.2) des Gasdurchgangs (10) angeordnet ist.

12. Der Druckregler (2) gemäß einem der Ansprüche 1 bis 11, wobei der Druckregler (2) keinen Detektor der Position des Durchflusswählers (18) und keinen Gasdurchflusssensor umfasst.

13. Ein Verfahren zur Bestimmung einer Gasdurchflussrate am Gasauslass eines Druckreglers an einer Gasflasche, wobei der Druckregler einen Druckminderer und einen Durchflusswähler stromabwärts des Druckminderers umfasst, **gekennzeichnet dadurch, dass** das Verfahren umfasst:
- Messen eines Gasdrucks im Gasfluss stromabwärts des Durchflusswählers und
stromaufwärts einer Durchflusseinschränkung; und
- Bestimmung der Gasdurchflussrate basierend auf dem gemessenen Gasdruck im
Gasfluss stromabwärts des Durchflusswählers und stromaufwärts einer Durchflusseinschränkung.

14. Das Verfahren gemäß Anspruch 13, ferner umfassend:
- Messen eines Drucks des Gases in der Gasflasche; und
- Bestimmung einer verbleibenden Nutzungszeit basierend auf dem gemessenen Druck des Gases in der Gasflasche und der bestimmten Gasdurchflussrate.

15. Das Verfahren gemäß einem der Ansprüche 13 und 14, ferner umfassend:
- Bestimmung, dass der Gasauslass blockiert ist, wenn der gemessene Gasdruck
im Gasfluss stromabwärts des Durchflusswählers und stromaufwärts einer Durchflusseinschränkung einen vorbestimmten Wert erreicht oder überschreitet,
vorzugsweise wobei der vorbestimmte Wert höher ist als der Gasdruck im Gasfluss stromabwärts des Durchflusswählers und stromaufwärts einer Durchflusseinschränkung, wenn der Durchflusswähler auf einem maximalen Querschnitt eingestellt ist und in Abwesenheit einer Blockierung, und gleich oder weniger als einen nominalen Ausgangsdruck des Druckminderers.

## Revendications

1. Un régulateur de pression (2) pour une bouteille de gaz, comprenant :
- une entrée de gaz (6), une sortie de gaz (8) et un passage de gaz (10) connectant fluidiquement l'entrée de gaz (6) à la sortie de gaz (8) ;
- un réducteur de pression (14) situé dans le passage de gaz (10), en aval de l'entrée de gaz (6) ;
- un sélecteur de flux (18) situé dans le passage de gaz (10), en aval du réducteur
de pression (14) ; **caractérisé par**
- un capteur de pression (28) situé dans le passage de gaz (10) entre le sélecteur
de flux (18) et la sortie de gaz (8) ;
le régulateur de pression (2) comprenant en outre :
- une restriction de flux (30) située dans le passage de gaz (10) et en aval du capteur de pression (28).

2. Le régulateur de pression (2) selon la revendication 1, dans lequel le sélecteur de flux (18) comprend une section transversale qui est sélectionnable entre une section transversale minimale et une section transversale maximale, la restriction de flux (30) ayant une section transversale plus petite que la section transversale maximale.

3. Le régulateur de pression (2) selon l'une des revendications 1 ou 2, dans lequel la restriction de flux (30) comprend un trou calibré monté en amont de la sortie de gaz (8).

4. Le régulateur de pression (2) selon l'une quelconque des revendications 1 à 3, dans lequel le passage de gaz (10.2) entre le sélecteur de flux (18) et la restriction de flux (30) forme un volume d'au moins 1 mm³.

5. Le régulateur de pression (2) selon l'une quelconque des revendications 1 à 4, dans lequel le sélecteur de flux (18) est configuré pour fournir un débit de gaz sélectionnable compris entre 0,1 et 25 litres/min.

6. Le régulateur de pression (2) selon l'une quelconque des revendications 1 à 5, dans lequel le sélecteur de flux (18) fournit un débit de gaz sélectionnable uniquement de manière graduelle.

7. Le régulateur de pression (2) selon l'une quelconque des revendications 1 à 6, comprenant en outre une unité de contrôle (25) à laquelle le capteur de pression (28) est connecté et configurée pour déterminer un débit de gaz à partir d'un signal du capteur de pression (28), de préférence dans laquelle l'unité de contrôle (25) est configurée pour déterminer le débit de gaz à partir du signal du capteur de pression (28) en absence de signal de détection d'une position du sélecteur de flux (18), de manière encore plus préférée dans laquelle l'unité de contrôle (25) est configurée pour déterminer le débit de gaz à partir du signal du capteur de pression (28) en l'absence de signal de mesure directe du débit de gaz.

8. Le régulateur de pression (2) selon la revendication 7, comprenant en outre un interrupteur de pression (34) situé dans le passage de gaz (10) entre le réducteur de pression (14) et le sélecteur de flux (18), et connecté électriquement à l'unité de contrôle (25), ladite unité de contrôle (25) étant configurée pour passer d'un mode veille à un mode réveil lorsque le gaz en contact avec l'interrupteur de pression (34) atteint une pression d'au moins 0,5 bar.

9. Le régulateur de pression (2) selon l'une quelconque des revendications 7 à 8, comprenant en outre un capteur de haute pression (32) situé dans le passage de gaz (10) en amont du réducteur de pression (14), et connecté électriquement à l'unité de contrôle (25), de préférence dans laquelle l'unité de contrôle (25) est configurée pour déterminer un temps d'utilisation restant de la bouteille de gaz basé sur le débit de gaz déterminé et un signal du capteur de haute pression (32).

10. Le régulateur de pression (2) selon l'une quelconque des revendications 1 à 9, comprenant en outre une branche (10.2) du passage de gaz (10) connectant directement entre le réducteur de pression (14) et le sélecteur de flux (18) et se connectant à un connecteur auxiliaire (36), de préférence dans lequel le connecteur auxiliaire (36) comprend un obturateur (36.2) qui est normalement fermé par un ressort et le régulateur de pression (2) comprend en outre un capteur de position (38) dudit obturateur (36.2), de manière encore plus préférée dans laquelle le connecteur auxiliaire (36) comprend en outre une broche de position (36.3) qui est attachée au obturateur (36.2) et s'étend à partir dudit obturateur (36.2) jusqu'au capteur de position (38) pour interagir avec ledit capteur de position (38).

11. Le régulateur de pression (2) selon la revendication 8 et selon la revendication 10, dans lequel l'interrupteur de pression (34) est situé dans la branche (10.2) du passage de gaz (10).

12. Le régulateur de pression (2) selon l'une quelconque des revendications 1 à 11, dans lequel le régulateur de pression (2) est dépourvu de détecteur de position du sélecteur de flux (18) et dépourvu de capteur de débit de gaz.

13. Un procédé pour déterminer un débit de gaz à la sortie de gaz d'un régulateur de pression sur une bouteille de gaz, dans lequel le régulateur de pression comprend un réducteur de pression et un sélecteur de flux en aval du réducteur de pression, **caractérisé en ce que** le procédé comprend :
- mesurer une pression de gaz dans le flux de gaz en aval du sélecteur de flux
et
en amont d'une restriction de flux ; et
- déterminer le débit de gaz basé sur la pression de gaz mesurée dans le flux de gaz en aval du sélecteur de flux et en amont d'une restriction de flux.

14. Le procédé selon la revendication 13, comprenant en outre :
- mesurer une pression de gaz dans la bouteille de gaz ; et
- déterminer un temps d'utilisation restant basé sur la pression de gaz mesurée de la bouteille de gaz et le débit de gaz déterminé.

15. Le procédé selon l'une des revendications 13 et 14, comprenant en outre :
- déterminer que la sortie de gaz est obstruée lorsque la pression de gaz mesurée
dans le flux de gaz en aval du sélecteur de flux et en amont d'une restriction de
flux atteint ou dépasse un niveau prédéterminé, de préférence dans lequel le niveau prédéterminé est supérieur à une pression de gaz dans le flux de gaz en aval du sélecteur de flux et en amont d'une restriction de flux lorsque le sélecteur de flux est réglé à une section transversale maximale et en absence d'obstruction, et égal ou inférieur à une pression nominale de sortie du réducteur de pression.
